Europäisches Patentamt

European Patent Office

Office européen des brevets

(19)

(11) Numéro de publication: **0 195 794**
**B1**

(12) **FASCICULE DE BREVET EUROPEEN**

(45) Date de publication du fascicule du brevet: **31.10.90**

(51) Int. Cl.⁵: **G 01 N 27/90**

(21) Numéro de dépôt: **85904643.5**

(22) Date de dépôt: **20.09.85**

(86) Numéro de dépôt international:
**PCT/FR85/00258**

(87) Numéro de publication internationale:
**WO 86/01896 27.03.86 Gazette 86/07**

(54) **PROCEDE DE DETECTION DE DEFAUTS DE SURFACE PAR COURANTS DE FOUCAULT ET DISPOSITIF METTANT EN OEUVRE CE PROCEDE.**

(30) Priorité: **20.09.84 FR 8414435**

(43) Date de publication de la demande:
**01.10.86 Bulletin 86/40**

(45) Mention de la délivrance du brevet:
**31.10.90 Bulletin 90/44**

(84) Etats contractants désignés:
**AT BE CH DE GB IT LI LU NL SE**

(56) Documents cités:
**EP-A-0 015 822**
**EP-A-0 035 391**
**EP-A-0 117 786**
**DE-C- 846 929**
**US-A-3 535 625**
**US-A-3 916 301**

(73) Titulaire: **INSTITUT DE RECHERCHES DE LA SIDERURGIE FRANCAISE (IRSID)**
**185, rue du Président Roosevelt**
**F-78105 Saint Germain-en-Laye Cédex (FR)**

(72) Inventeur: **MULLER, Jean, Louis**
**31, rue de Verdun**
**F-78110 Le Vésinet (FR)**

(74) Mandataire: **Ventavoli, Roger et al**
**IRSID Service de la Propriété Industrielle B.P. 320**
**Voie Romaine**
**F-57214 Maizières-lès-Metz Cédex (FR)**

Courier Press, Leamington Spa, England.

## Description

La présente invention a pour objet un procédé de détection de défauts de surface par courants de Foucault et, plus particulièrement, un procédé du type selon lequel un champ magnétique est produit au moyen d'un émetteur placé à proximité de la surface d'un produit à contrôler et un récepteur distinct de l'émetteur est également placé à proximité de la surface du produit pour recueillir un signal traduisant d'éventuelles perturbations des courants de Foucault à la surface du produit en raison de défauts présents à cette surface.

Le domaine d'application de l'invention est celui de la détection de défauts en surface de demi-produits métallurgiques, en particulier la détection de criques sur des demi-produits sidérurgiques tels que brames, blooms ou billettes en acier à la sortie d'une installation de coulée continue.

L'application des courants de Foucault à la détection de défauts superficiels de demi-produits métallurgiques est connue de longue date, notamment par le document DE-C-846929.

Actuellement, la détection de défauts de surface par courants de Foucault est réalisée au moyen de sondes à double fonction, c'est-à-dire dans lesquelles un même enroulement est à la fois émetteur et récepteur ou, comme dans le cas du procédé du type défini ci-avant, de sondes à fonctions séparées dans lesquelles les enroulements émetteur et récepteur sont distincts.

Les sondes à fonctions séparées permettent une plus grande sensibilité de détection. Le document EP-A-0117786 divulgue toutes les caractéristiques techniques énoncées dans le préambule de la présente revendication 1 et présente une telle sonde qui comprend un enroulement émetteur et quatre enroulements récepteurs disposés sur un cercle centré sur l'enroulement émetteur et alignés deux à deux selon des directions perpendiculaires. Lors de la mesure, on fait correspondre l'une de ces directions à l'orientation générale des hétérogénéités prévues. Mais la détection des défauts est souvent très difficile en raison d'un fort taux de bruit. En effet, dans une sonde classique à fonctions séparées, l'enroulement ou les enroulements de réception sont placés dans la zone d'action de l'enroulement émetteur. Or, la réponse du récepteur est affectée par de nombreux facteurs tels que la géométrie, la conductivité et la perméabilité du produit et les inévitables variations de ces facteurs, en l'absence même de défauts proprement dits, affaiblissent considérablement le rapport signal/bruit.

Pour améliorer ce rapport, il est usuel d'avoir recours à des sondes différentielles avec deux enroulements récepteurs devant lesquels défile le produit à contrôler, comme présenté dans le document US-A-3916301. La détection est effectuée par traitement d'un signal représentatif de la différence entre les signaux délivrés par les deux enroulements récepteurs. La relative proximité de ces deux enroulements permet alors de s'affranchir de l'influence de variations lentes de la structure ou des caractéristiques du produit.

Toutefois, même avec des sondes différentielles, il reste souvent difficile de réaliser une détection fiable en raison d'un taux de bruit encore important. Il en est ainsi par exemple dans le cas de la détection de criques sur une brame à cause, en particulier, de la présence d'irrégularités de surface (rides ou ondulations) qui perturbent le champ sans constituer des défauts à proprement parler. De plus, et d'une façon plus générale, la réponse du détecteur est non seulement affectée par des variations de la géométrie du produit, mais aussi par des variations de conductivité et de perméabilité dues à des hétérogénéités locales, ainsi que par des variations de distance entre récepteur et produit.

Aussi, la présente invention a-t-elle pour but de fournir un procédé de détection de défauts de surface par courants de Foucault apportant, par rapport aux procédés existants, une amélioration importante du rapport signal/bruit.

Ce but est atteint grâce à un procédé du type défini en tête de la présente description appliqué à la détection de défauts de surface de demi-produits métallurgiques, et selon lequel, conformément à l'invention, un premier récepteur est placé par rapport à un premier émetteur, d'une part, de manière à être aligné avec le premier émetteur dans une direction correspondant à l'orientation générale de défauts à détecter à la surface du produit, et, d'autre part, à une distance du premier émetteur suffisante pour que ledit premier récepteur ne soit pas substantiellement influencé par les courants de Foucault engendrés par le premier émetteur lorsque la surface du demi-produit examiné est exempte de défauts, de sorte qu'un signal significatif n'est recueilli par le premier récepteur qu'en cas de déviation des courants de Foucault en sa direction en raison d'une discontinuité à la surface du demi-produit.

La disposition du récepteur dans une zone située à l'extérieur de celle d'influence directe de l'émetteur apporte plusieurs avantages.

D'abord, tout ce qui peut perturber les courants de Foucault n'a pas de conséquence sur la détection tant que ces courants restent confinés à l'aplomb de l'émetteur. Ainsi, des variations locales de conductivité ou de perméabilité ne peuvent gêner la détection. De même, dans une certaine mesure, la présence de rides ou d'ondulations apporte moins de perturbations.

Ensuite, le simple fait de recueillir un signal au récepteur suffit pour indiquer l'existence d'un défaut. Des variations de distance entre le récepteur et le produit sont moins gênantes et il est tout à fait possible de se passer d'une détection différentielle. Il faut bien remarquer que, selon l'invention, le signal produit par le détecteur influencé par les courants de Foucault déviés par le défaut n'est pas comparé au signal produit par un autre détecteur influencé par les courants de Foucault engendrés par le même émetteur, comme c'est le cas des sondes différentielles de l'art antérieur.

Bien entendu, les défauts détectés sont ceux sous forme de discontinuité de surface ayant une certaine dimension dans la direction suivant laquelle l'émetteur et le récepteur sont alignés. Ainsi, dans le cas d'une brame en défilement, un émetteur et un récepteur alignés transversalement par rapport au produit permettront la détection de défauts tels que crevasses, entailles ou criques orientées principalement transversalement. La détection de défauts de même type, mais orientés principalement longitudinalement, nécessite un émetteur et un récepteur alignés dans la direction longitudinale du produit.

Plusieurs récepteurs peuvent ainsi être associés à un même émetteur pour détecter des défauts orientés dans différentes directions, les signaux émis par les récepteurs en cas de présence de défaut étant alors traités séparément.

L'invention a aussi pour but de fournir un dispositif permettant la mise en oeuvre du procédé défini plus haut.

Ce but est atteint grâce à un dispositif de détection par courants de Foucault de défauts de surface de produits métallurgiques, dispositif comportant un premier émetteur destiné à engendrer un champ magnétique à proximité de la surface d'un produit à contrôler, et un premier récepteur distinct de l'émetteur et destiné à recueillir un signal traduisant d'éventuelles perturbations des courants de Foucault à la surface du produit en raison de défauts présents à cette surface, dispositif dans lequel, conformément à l'invention, le premier récepteur est placé par rapport au premier émetteur, d'une part de manière à être aligné avec le premier émetteur dans une direction correspondant à l'orientation générale des défauts à détecter à la surface d'un demi-produit métallurgique, et d'autre part, à une distance du premier émetteur suffisante pour que ledit premier récepteur ne soit pas directement influencé par le champ magnétique engendré par le premier émetteur lorsque la surface du demi-produit examiné est exempte de défaut, de sorte qu'un signal significatif n'est recueilli par le récepteur qu'en cas de déviation des courants de Foucault en direction du récepteur en raison de la présence d'un défaut à la surface du demi-produit.

Le procédé et le dispositif conformes à l'invention seront mieux compris à la lecture de la description faite ci-après, à titre indicatif mais non limitatif, en référence aux dessins annexés sur lesquels:

les figures 1A et 1B illustrent très schématiquement un procédé de détection conforme à l'invention, respectivement en l'absence et en présence de défaut à la surface d'un produit contrôlé,

la figure 2 est un schéma d'un circuit de traitement des signaux des enroulements récepteurs de la figure 1,

les figures 3A et 3B illustrent les variations dans le plan de phase de signaux obtenus au moyen de différents dispositifs de détection, dont celui de la figure 1,

les figures 4A à 4D illustrent les variations dans le plan de phase de signaux obtenus au moyen du dispositif de la figure 1 pour différentes valeurs de la distance entre émetteur et récepteur transversal,

les figures 5A à 5E illustrent les variations dans le plan de phase de signaux obtenus au moyen du dispositif de la figure 1 pour différentes valeurs de la fréquence d'excitation de l'émetteur,

la figure 6 illustre très schématiquement un dispositif de détection à sonde différentielle conforme à l'invention, et,

les figures 7A à 7D illustrent les variations dans le plan de phase de signaux obtenus au moyen de différents dispositifs de détection, dont celui de la figure 6, dans le cas d'une crique sur une brame en sortie d'une installation de coulée continue.

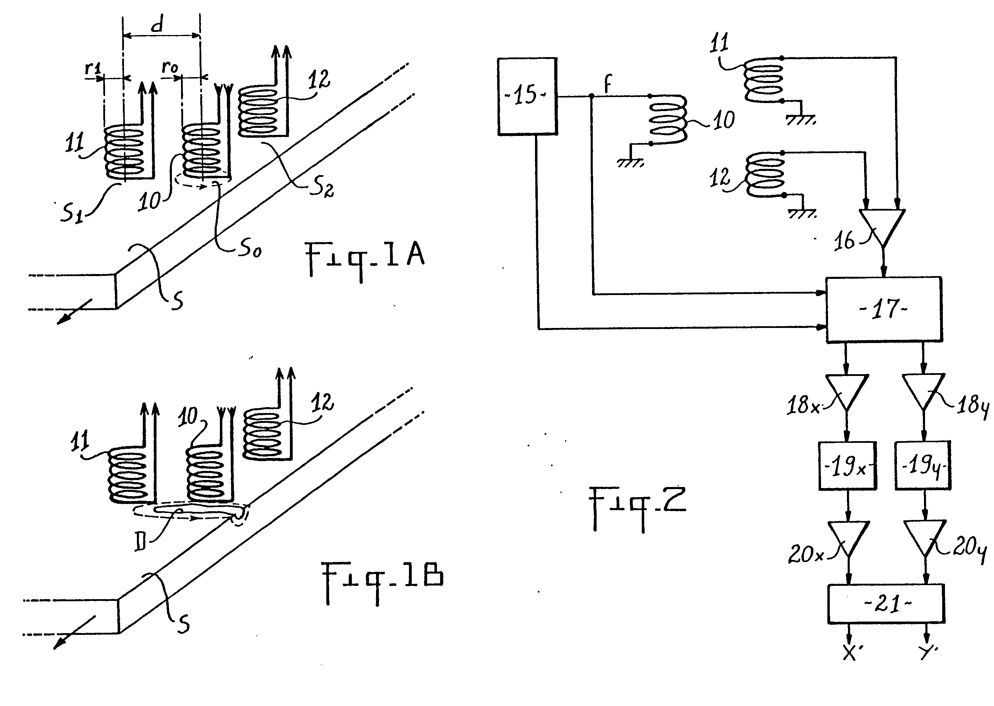

Le dispositif de détection représenté très schématiquement sur la figure 1A comprend un émetteur 10, un premier récepteur 11 et un second récepteur 12 placés en regard et à proximité de la surface S d'un produit métallique à contrôler défilant devant le dispositif de détection.

L'émetteur 10 est constitué par une bobine d'axe perpendiculaire à la surface S et alimentée par un courant alternatif de fréquence fixe $f$ prédéterminée. Un champ magnétique alternatif est ainsi engendré qui provoque la circulation de courants de Foucault confinés à chaque instant essentiellement dans la partie $S_0$ qui est délimitée par la projection sur cette surface de la bobine 10.

Les récepteurs 11 et 12 sont également constitués par des bobines d'axes perpendiculaires à la surface S.

La bobine 11 est espacée de la bobine 10 et se trouve à chaque instant en regard d'une zone $S_1$ de la surface S qui est toute entière à l'extérieur de la partie de surface $S_0$. Ainsi, normalement, la circulation des courants de Foucault dans la partie de surface $S_0$ n'induit pas de signal dans la bobine 11.

La bobine 11 est disposée par rapport à la bobine 10 en fonction du type de défaut à détecter. En effet, l'invention est basée sur le fait que, lorsqu'une discontinuité de surface se présente dans la zone d'influence de l'émetteur, les courants de Foucault sont déviés pour contourner la discontinuité et ne restent plus confinés à l'aplomb de l'émetteur. Le récepteur étant placé par rapport à l'émetteur dans la direction dans laquelle les courants sont déviés, il ne fournira donc un signal qu'en présence d'un défaut.

Si l'on se place dans le cas où le produit à contrôler est un produit en bande pouvant présenter des défauts de surface sous forme de crevasses, entailles ou criques transversales, les axes des bobines 10 et 11 sont disposés dans un même plan transversal par rapport au produit en défilement. Lorsque les défauts à détecter prennent naissance sur un bord du produit, l'émetteur 10 est placé en regard de la partie de surface du produit adjacente à ce bord. La figure 18 montre le passage d'un défaut D dans la zone de détection, provoquant la déviation des courants de Foucault en direction du récepteur 11.

La bobine 12 est, comme la bobine 11, espacée de la bobine 10 et se trouve à chaque instant en regard d'une zone $S_2$ de la surface S qui est toute entière à l'extérieur de la partie de surface $S_0$. Les axes des bobines 10 et 12 sont dans un plan longitudinal, donc perpendiculaire à la direction générale des défauts transversaux à détecter. Le récepteur 12 n'est ainsi jamais influencé par l'émetteur que ce soit directement ou indirectement en cas de défaut transversal. La bobine 12 est utilisée en tant que référence pour permettre d'éliminer l'influence de champs magnétiques ambiants dans le signal recueilli par la bobine 11, grâce à un montage différentiel.

Bien entendu, le dispositif de détection de la figure 1A peut être utilisé pour la détection de défauts longitudinaux en inversant les rôles des récepteurs 11 et 12.

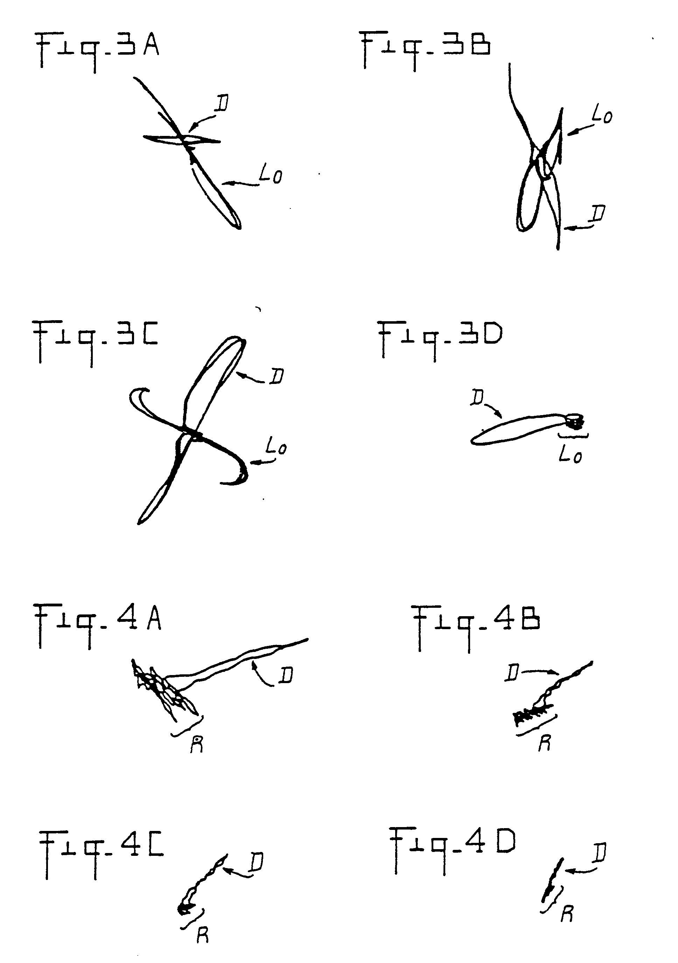

Comme le montre la figure 2, la bobine émettrice 10 est alimentée au moyen d'un générateur 15 et les signaux recueillis par les bobines réceptrices 11 et 12 sont appliqués aux entrées respectivement non-inverseuse et inverseuse d'un amplificateur différentiel 16. Le signal de sortie de cet amplificateur est démodulé en phase et en quadrature au moyen d'un circuit de démodulation 17 recevant par ailleurs, d'une part, le signal de sortie du générateur 15 et, d'autre part, ce même signal de sortie déphasé de 90°. Les signaux démodulés en sortie du circuit 17 sont traités dans deux voies parallèles comprenant, chacune, un premier étage d'amplification 18x, 18y, un circuit 19x, 19y de rattrapage de décalage de zéro et un second étage d'amplification 20x, 20y à gain réglable. Les amplitudes des signaux X et Y en sortie des étages 20x et 20y sont représentatives des composantes "active" et "réactive" du signal de sortie de l'amplificateur 16, après démodulation en phase et en quadrature. On notera que les circuits 17 à 20x et 20y décrits ci-dessus forment un ensemble connu en soi et utilisé dans des appareils de détection par courants de Foucault tel que l'appareil commercialisé par la société PLS sous la référence "Metalog" ou par la Société HBS sous la référence "EC 3000". Il est également connu de compléter ces circuits par un circuit 21 de rotation de phase recevant les signaux X et Y et délivrant des signaux:

$$X' = X \cos a + Y \sin a, \text{ et}$$
$$Y' = -X \sin a + Y \cos a,$$

représentatifs des projections du signal de sortie de l'amplificateur 16 sur des axes orthogonaux d'un système de référence déphasé d'un angle a par rapport au signal de sortie du générateur 15. Cet angle est choisi pour obtenir un rapport signal/bruit maximum pour l'une des composantes X', Y'. Cette composante est ensuite traitée, par exemple par comparaison avec un seuil prédéterminé, pour fournir, le cas échéant, un signal indiquant la présence d'un défaut.

Pour comparer les résultats obtenus avec le procédé de détection conforme à l'invention à ceux obtenus par des procédés de l'art antérieur, et évaluer l'influence de différents paramètres, plusieurs essais ont été effectués dont les résultats sont donnés sous forme de variations des signaux obtenus représentées dans le plan de phase, c'est-à-dire les courbes décrites par un point ayant pour coordonnées les valeurs X et Y en sortie des étages 20x et 20y.

### Essais No. 1.

Les figures 3A à 3D illustrent les résultats obtenus au moyen de différentes sondes de détection lorsque l'on impose un déplacement en hauteur des sondes réceptrices par rapport à la surface du produit ("lift-off"):

la figure 3A correspond à l'utilisation de deux sondes classiques à double fonction sous forme de bobines plates;

la figure 3B correspond à l'utilisation de sondes classiques à double fonction sous forme de bobines à ferrites; et

la figure 3C correspond à l'utilisation de sondes classiques à fonctions séparées sous forme de bobines à ferrites; et

la figure 3D correspond à l'utilisation du dispositif de détection conforme à l'invention illustré par la figure 1, les bobines 10, 11 et 12 étant des bobines plates de 10mm de diamètre et les axes des bobines 11 et 12 étant distants de l'axe de la bobine 10 tous deux de 20mm.

Dans tous les cas, la fréquence d'excitation de l'émetteur est égale à 20 kHz.

Sur les figures 3A à 3D, les courbes D représentent l'influence du défaut et les courbes Lo l'influence du déplacement en hauteur des récepteurs par rapport à la surface du produit. Ces courbes montrent clairement que l'influence de variation de position en hauteur du récepteur devient tout à fait négligeable avec le procédé conforme à l'invention.

### Essais No 2.

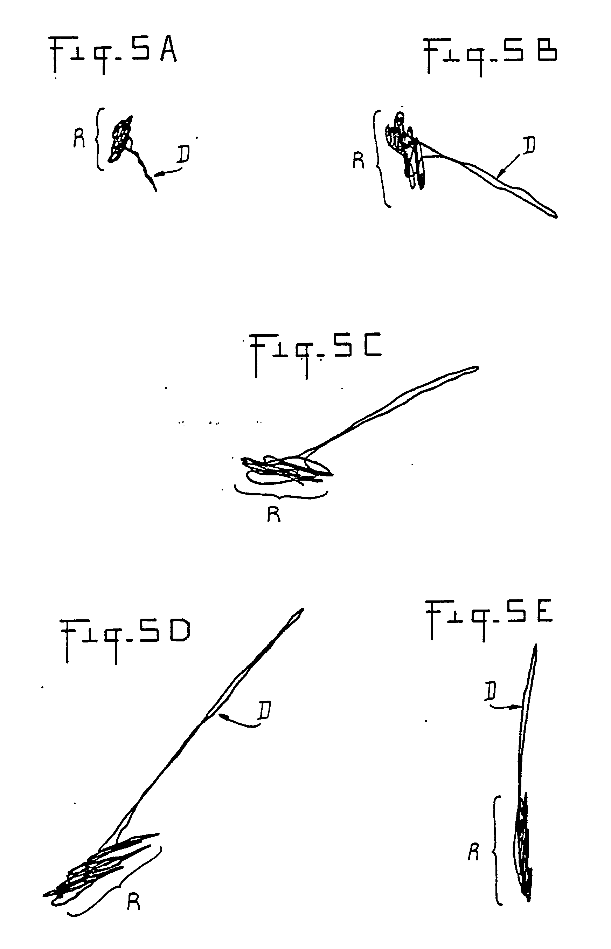

Les figures 4A à 4D illustrent les résultats obtenus avec le dispositif de détection de la figure 1 en faisant varier la distance d entre les axes des bobines 10 et 11, les bobines 10, 11 et 12 étant des bobines plates de 11 mm de diamètre et la fréquence d'excitation étant 20 kHz.

Les mesures ont été effectuées sur une brame présentant une crique transversale et des rides. Les courbes D représentent le défaut et les courbes R les rides. Les figures 4A à 4D correspondent à des valeurs de d respectivement égales à 20, 25, 30 et 35 mm.

L'on observe, ce qui est normal, que l'influence du défaut et l'influence des rides diminuent lorsque la distance d augmente. Il n'apparait pas d'augmentation substantielle du rapport signal/bruit lorsque la distance d passe de 20 mm à 35 mm et, dans tous les cas, le signal correspondant aux rides peut être en grande partie éliminé, moyennant rotation de phase, en ne retenant que la composante obtenue par projection sur l'axe perpendiculaire à la direction générale des lobes allongés constituant les courbes R.

D'une façon générale, il est nécessaire de disposer le récepteur à une distance suffisamment grande de l'émetteur pour ne pas être influencé directement par lui de façon substantielle et à une distance suffisamment rapprochée pour recueillir un signal significatif compte-tenu de la longueur des défauts à détecter. Si l'on se place dans le cas de la détection de criques sur une brame en acier obtenue par coulée continue, des résultats satisfaisants sont obtenus lorsque la valeur $d - (r_0 + r_1)$ est comprise entre 0 et 25mm, $r_0$ et $r_1$ étant les rayons des bobines 10 et 11.

### Essais No. 3

Les figures 5A et 5E illustrent les résultats obtenus dans des conditions différant de celles des essais No. 2, d'une part, en ce que la distance d est maintenue constante et égale à 20 mm et, d'autre part, en ce que la fréquence f d'excitation de l'émetteur 10 est respectivement égale à 10, 20, 50, 100 et 250 kHz.

Une fréquence suffisamment élevée est souhaitable pour que la sonde soit assez sensible et que l'effet de rides conserve une phase relativement constante permettant son élimination par projection de phase. Une fréquence au moins égale à 20 kHz semble ici préférable.

Toutefois, "l'effet de peau" augmentant lorsque la fréquence croît, toute rupture géométrique transversale tend à provoquer un même signal; l'amplitude relative du signal "rides" croît et la phase tend à devenir la même pour le signal "rides" et le signal "criques", empêchant l'amélioration du rapport signal/bruit par projection de phase. Il n'apparaît pas souhaitable de dépasser la valeur de 100 kHz, voire même, de préférence 50 kHz.

La figure 6 illustre un autre mode de mise en oeuvre du procédé conforme à l'invention pour réaliser une détection effectivement différentielle.

Si l'on se place à nouveau dans le cas de la détection de défauts de surface transversaux sur un produit en défilement, deux couples identiques formés chacun d'un émetteur et d'un récepteur sont utilisés et sont disposés l'un derrière l'autre dans le sens de défilement du produit. Le premier couple comprend une bobine émettrice 30 et une bobine réceptrice 31 disposées comme les bobines 10 et 11 du dispositif de la figure 1A. Le deuxième couple comprend également une bobine émettrice 33 et une bobine réceptrice 32 disposées de façon semblable. Ainsi, les axes des bobines 30 et 31 sont dans un plan transversal qui est distant d'une longueur 1 du plan transversal défini par les axes des bobines 33 et 32.

Lorsqu'un défaut transversal se présente, il va successivement influencer les bobines 32 et 31. Les signaux recueillis par ces bobines sont traités au moyen d'un circuit identique à celui de la figure 2, les bobines émettrices 30 et 33 étant alimentées en parallèle. En cas de défaut, le signal différentiel va présenter deux variations successives dans un sens puis dans l'autre.

La détection ainsi réalisée est effectivement différentielle puisque le signal obtenu est symétrique pour un défaut donné (il n'en est pas de même dans le cas du dispositif de la figure 1 qui réalise une détection pseudo-différentielle). La distance 1 entre les émetteurs doit être suffisante pour éviter une interaction entre les couples émetteur-récepteur, sans être trop grande pour que les récepteurs restent soumis aux mêmes conditions ambiantes. A titre indicatif, la valeur de 1 pourra être du même ordre que la valeur de la distance d entre les axes des bobines 30 (ou 33) et 31 (ou 32), cette dernière étant choisie selon les critères indiqués plus haut pour le mode de réalisation de la figure 1A.

Les essais suivants ont été réalisés pour comparer les résultats obtenus avec le dispositif de la figure 6 à ceux obtenus au moyen de sondes différentielles de l'art antérieur.

### Essais No. 4

Les figures 7A à 7D illustrent les résultats obtenus dans le plan de phase au moyen de différents dispositifs de détection dans le cas de la détection d'une crique sur une brame de coulée continue.

La figure 7A correspond à l'utilisation d'une sonde classique à fonctions séparées formée de bobines à noyaux de ferrite, avec une fréquence d'excitation de 5 kHz.

La figure 78 correspond à l'utilisation d'une sonde classique à double fonction formée de bobines à noyaux de ferrite avec une fréquence d'excitation de 13 kHz.

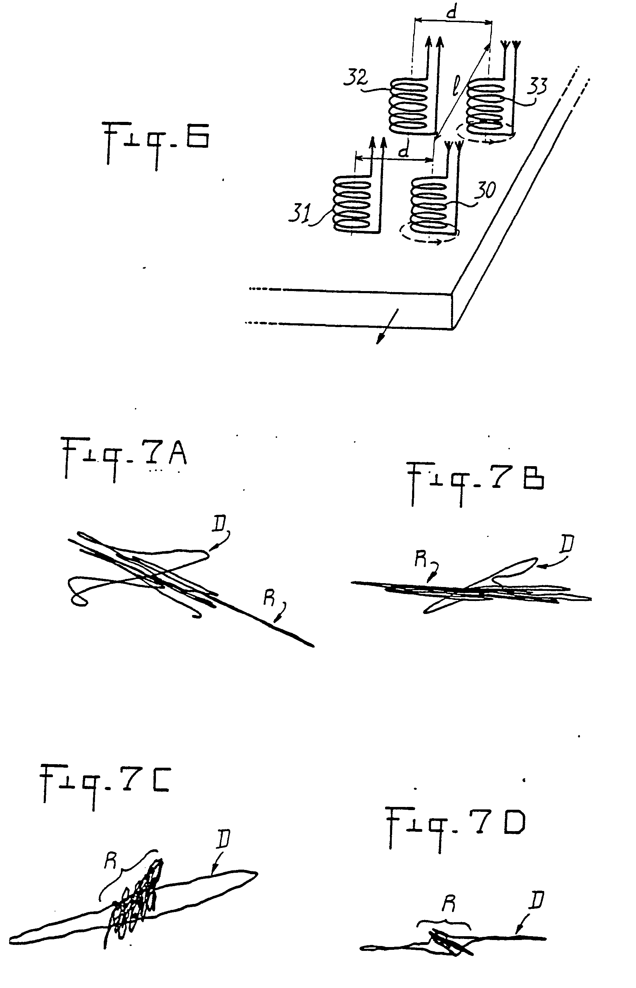

Les figures 7C et 7D correspondent à l'utilisation d'un dispositif de détection conforme à l'invention, tel que celui de la figure 6. Dans le cas de la figure 7C, 1 = d = 20 mm et la fréquence d'excitation est de 20 kHz alors que, dans le cas de la figure 7D, 1 = d = 30 mm et la fréquence d'excitation est de 50 kHz.

Il est clair d'après les courbes des figures 7A à 7D que l'utilisation du procédé de détection selon l'invention permet une nette minimisation du signal "rides" (courbes R) par rapport au signal "crique" (courbes D).

Dans ce qui précède, on a toujours envisagé le cas où un signal est formé pour être représentatif de la différence entre des signaux fournis par deux bobines réceptrices (détection pseudo-différentielle ou effectivement différentielle).

Bien entendu, l'invention est également utilisable, et c'est l'un de ses avantages, pour réaliser une détection absolue, c'est-à-dire utilisant une seule bobine émettrice et une seule bobine réceptrice telle que les bobines 10 et 11 de la figure 1A.

Le signal recueilli par la bobine réceptrice est alors directement appliqué au démodulateur en phase et en quadrature.

## Revendications

1. Procédé de détection par courants de Foucault, de défauts de surface, procédé selon lequel un champ magnétique est produit au moyen d'un premier émetteur placé à proximité de la surface du produit à contrôler et un premier récepteur distinct du premier émetteur est placé également à proximité de la surface du produit pour recueillir un signal traduisant d'éventuelles perturbations des courants de Foucault à la surface du produit en raison de défauts présents à cette surface, caractérisé en ce qu'il est appliqué à la détection de défauts de surface de demi-produits métallurgiques, en ce que ledit premier récepteur est placé par rapport au premier émetteur, d'une part, de manière à être aligné avec le premier émetteur dans une direction correspondant à l'orientation générale des défauts à détecter à la surface du produit, et, d'autre part, à une distance du premier émetteur suffisante pour que ledit premier récepteur ne soit pas substantiellement influencé par les courants de Foucault engendrés par le premier émetteur lorsque la surface du demi-produit examiné est exempte de défaut, de sorte qu'un signal significatif n'est recueilli par le premier récepteur qu'en cas de déviation des courants de Foucault en sa direction en raison d'une discontinuité à la surface du demi-produit.

2. Procédé selon la revendication 1, caractérisé en ce qu'un second émetteur est placé en regard d'une partie de la surface du demi-produit située en dehors de la partie de surface située directement en regard du premier émetteur, au moins un second récepteur est placé par rapport au second émetteur de la même manière que le premier récepteur par rapport au premier émetteur, et on élabore un signal différentiel représentatif de la différence entre les signaux fournis par les premier et second récepteurs.

3. Procédé selon l'une quelconque des revendications 1 et 2, caractérisé en ce que l'émetteur engendre un champ magnétique alternatif de fréquence comprise entre 20 et 50 kHz.

4. Procédé selon l'une quelconque des revendications 1 à 3, selon lequel l'émetteur et le ou chaque récepteur utilisés sont sous forme de bobines d'axes perpendiculaires à la surface du produit, caractérisé en ce que la distance d entre l'axe de la bobine émettrice et l'axe de la ou chaque bobine réceptrice est telle que l'intervalle $d - (r_0 + r_1)$ est compris entre 0 et 25 mm, $r_0$ et $r_1$ étant les rayons respectifs des bobines émettrice et réceptrice.

5. Utilisation d'un procédé selon l'une quelconque des revendications 1 à 4, pour la détection de défauts de surface de demi-produits sidérurgiques coulés en continu.

6. Dispositif pour la détection par courants de Foucault, de défauts de surface de produits métallurgiques, comportant un premier émetteur (10, 30, 33) destiné à engendrer un champ magnétique à proximité de la surface d'un produit à contrôler, et un premier récepteur (11, 31, 32) distinct du premier émetteur et destiné à recueillir un signal traduisant d'éventuelles perturbations des courants de Foucault à la surface du produit en raison de défauts présents à cette surface, caractérisé en ce que ledit premier récepteur (11, 31, 32) est placé par rapport au premier émetteur (10, 30, 33) d'une part de manière à être aligné avec le premier émetteur dans une direction correspondant à l'orientation générale des défauts à détecter à la surface d'un demi-produit métallurgique, et d'autre part à une distance du premier émetteur suffisante pour que ledit premier récepteur ne soit pas directement influencé par le champ magnétique engendré par le premier émetteur lorsque la surface du demi-produit examiné est exempte de défaut, de sorte qu'un signal significatif n'est recueilli par le récepteur qu'en cas de déviation des courants de Foucault en direction du récepteur en raison de la présence d'un défaut à la surface du demi-produit.

7. Dispositif selon la revendication 6 dans lequel l'émetteur et le récepteur utilisés sont sous forme de bobines d'axes perpendiculaires à la surface du produit, caractérisé en ce que la distance d entre l'axe de la bobine émettrice et l'axe de la ou chaque bobine réceptrice est telle que l'intervalle $d - (r_0 + r_1)$ est compris entre 0 et 25 mm, $r_0$ et $r_1$ étant les rayons respectifs des bobines émettrice et réceptrice.

8. Dispositif selon l'une quelconque des revendications 6 et 7, caractérisé en ce qu'il comporte un second émetteur (33) et un second récepteur (32), ledit second émetteur étant espacé du premier émetteur de manière à éviter une interaction entre les couples émetteur-récepteur (30, 31; 33, 32) premier, le second récepteur étant placé par rapport au second émetteur de la même manière que le premier récepteur (31) par rapport au premier émetteur (30), et des moyens sont prévus pour fournir un signal représentatif de la différence entre les signaux fournis par les deux récepteurs.

9. Appareil de détection de défauts sur une brame en acier en sortie d'une installation de coulée continue, caractérisé en ce qu'il comprend un dispositif selon l'une quelconque des revendications 6 à 8.

**Patentansprüche**

1. Wirbelstromverfahren zur Feststellung von Oberflächenfehlern, bei dem mittels eines ersten, nahe der Oberfläche des zu überprüfenden Produktes angeordneten Senders ein Magnetfeld erzeugt wird und ein vom ersten Sender verschiedener erster Empfänger ebenfalls nahe der Oberfläche des Produktes angeordnet wird, um ein allfällige Störungen der Wirbelströme an der Oberfläche des Produktes auf Grund vorhandener Fehler dieser Oberfläche übermits telndes Signal aufzunehmen, dadurch gekennzeichnet, dass es zum Feststellen von Oberflächenfehlern metallurgischer Halbfabrikate verwendet wird, dass der erste Empfänger bezüglich des ersten Senders einerseits derart angeordnet wird, dass er mit dem ersten Sender in einer Richtung ausgerichtet ist, die der allgemeinen Ausrichtung der festzustellenden Fehler der Oberfläche des Produktes entspricht, und anderseits in einer derart ausreichenden Entfernung von dem ersten Sender, dass der erste Empfänger von den vom ersten Sender erzeugten Wirbelströmen im wesentlichen unbeeinflusst ist, so lange die Oberfläche des überprüften Halbfabrikates von Fehlern frei ist, so dass vom ersten Empfänger nur im Falle der Ablenkung der Wirbelströme in seine Richtung auf Grund einer Unregelmässigkeit der Oberfläche des Halbfabrikates ein signifikantes Signal aufgefangen wird.

2. Verfahren nach Anspruch 1, dadurch gekennzeichnet, dass ein zweiter Sender gegenüber einem Flächenabschnitt des Halbfabrikates ausserhalb des unmittelbar gegenüber dem ersten Sender gelegenen Flächenabschnittes angeordnet wird, dass mindestens ein zweiter Empfänger relativ zum zweiten Sender in gleicher Weise angeordnet wird, wie der erste Empfänger bezüglich des ersten Senders, und dass man ein für die Differenz zwischen den vom ersten und vom zweiten Empfänger gelieferten Signalen repräsentatives Differenzsignal erarbeitet.

3. Verfahren nach Anspruch 1 oder 2, dadurch gekennzeichnet, dass der Sender ein Magnetwechselfeld einer Frequenz zwischen 20 und 50kHz erzeugt.

4. Verfahren nach einem der Ansprüche 1 bis 3, bei dem der Sender und der bzw. jeder verwendete Empfänger in Form von Spulen mit zur Oberfläche des Produktes senkrechter Achse ausgebildet sind, dadurch gekennzeichnet, dass der Abstand d zwischen der Achse der Senderspule und der Achse der bzw. jeder Empfängerspule derart bemessen ist, dass der Zwischenraum d — $(r_0 + r_1)$ zwischen 0 und 25mm liegt, wobei $r_0$ und $r_1$ die jeweiligen Radien der Sender- und der Empfängerspule sind.

5. Verwendung eines Verfahrens nach einem der Ansprüche 1 bis 4 zum Feststellen von Oberflächenfehlern stranggegossener Halbfabrikate der Eisen- bzw. Stahlindustrie.

6. Vorrichtung zur Feststellung von Oberflächenfehlern metallurgischer Produkte mittels Wirbelströmen, mit einem ersten Sender (10, 30, 33) zum Erzeugen eines Magnetfeldes nahe der Oberfläche eines zu überprüfenden Produktes, und mit einem ersten, vom ersten Sender verschiedenen Empfänger (11, 31, 32) zum Auffangen eines allfällige Störungen der Wirbelströme an der Oberfläche des Produktes auf Grund vorhandener Fehler dieser Oberfläche übermittelnden Signales, dadurch gekennzeichnet, dass der erste Empfänger (11, 31, 32) bezüglich des ersten Senders (10, 30, 33) einerseits derart angeordnet ist, dass er mit dem ersten Sender in einer Richtung ausgerichtet ist, die der allgemeinen Ausrichtung der festzustellenden Fehler der Oberfläche eines metallurgischen Halbfabrikates entspricht, und anderseits in einer derart ausreichenden Entfernung von dem ersten Sender, dass der erste Empfänger von dem vom ersten Sender erzeugten Magnetfeld direkt nicht beeinflusst ist, so lange die Oberfläche des überprüften Halbfabrikates von Fehlern frei ist, so dass vom ersten Empfänger nur im Falle der Ablenkung der Wirbelströme in Richtung des Empfängers auf Grund einer Unregelmässigkeit der Oberfläche des Halbfabrikates ein signifikantes Signal aufgefangen wird.

7. Vorrichtung nach Anspruch 6, bei der der jeweils verwendete Sender und Empfänger in Form von Spulen mit zur Oberfläche des Produktes senkrechter Achse ausgebildet sind, dadurch gekennzeichnet, dass der Abstand d zwischen der Achse der Senderspule und der Achse der bzw. jeder Empfängerspule derart bemessen ist, dass der Zwischenraum d — $(r_0 + r_1)$ zwischen 0 und 25mm liegt, wobei $r_0$ und $r_1$ die jeweiligen Radien der Sender- und der Empfängerspule sind.

8. Vorrichtung nach Anspruch 6 oder 7, dadurch gekennzeichnet, dass sie einen zweiten Sender (33) und einen zweiten Empfänger (32) aufweist, von denen der zweite Sender vom ersten Sender derart beabstandet ist, dass eine Wechselwirkung zwischen den Sender-Empfänger-Paaren (30, 31; 33, 32) vermieden ist, und der zweite Empfänger bezüglich des zweiten Senders in gleicher Weise angeordnet ist, wie der erste Empfänger (31) bezüglich des ersten Senders (30), und dass Einrichtungen für die Abgabe eines für die Differenz zwischen den von den beiden Empfängern gelieferten Signalen repräsentativen Signales vorgesehen sind.

9. Einrichtung zum Feststellen von Fehlern an einer Stahlbramme am Ausgange einer Stranggiessanlage, dadurch gekennzeichnet, dass sie eine Vorrichtung nach einem der Ansprüche 6 bis 8 aufweist.

**Claims**

1. Method for detecting surface defects by means of eddy currents, a method according to which a magnetic field is produced by means of a first transmitter placed in proximity of the surface of the product to be inspected and a first receiver separate from the first transmitter is placed likewise in proximity of the surface of the product in order to pick up a signal conveying any disturbances of the eddy currents to the surface of the product by reason of defects present at this surface, characterised in that it is applied to the detection of surface defects of metallurgical semi-manufactured products, in that the said first receiver is placed in relation to the first transmitter, on the one hand, in such a way as to be aligned with the first transmitter in a direction corresponding to the general orientation of the defects to be detected on the surface of the product, and, on the other hand, at a sufficient distance from the first transmitter for the said first receiver not to be substantially influenced by the eddy currents generated by the first transmitter when the surface of the semi-manufactured product examined is free from defect, in order that a significant signal only be picked up by the first receiver in the case of the deflection of the eddy currents in its direction as a result of a discontinuity on the surface of the semi-manufactured product.

2. Method according to claim 1, characterised in that a second transmitter is placed opposite a part of the surface of the semi-manufactured product situated outside the part of the surface situated directly opposite the first transmitter, at least a second receiver is placed in relation to the second transmitter in the same manner as the first receiver in relation to the first transmitter, and a differential signal representative of the difference between the signals produced by the first and second receivers is developed.

3. Method according to either of claims 1 and 2, characterised in that the transmitter generates an alternating magnetic field the frequency of which is contained between 20 and 50 kHz.

4. Method according to any one of claims 1 to 3, according to which the transmitter and the or each receiver used are in the form of coils with axes perpendicular to the surface of the product, characterised in that the distance d between the axis of the transmitting coil and the axis of the or each receiving coil is such that the space $d - (r_0 + r_1)$ is contained between 0 and 25 mm, $r_0$ and $r_1$ being the respective radii of the transmitting and receiving coils.

5. Use of a method according to any one of claims 1 to 4 for detecting surface defects of continuously cast iron and steel semi-manufactured products.

6. Device for detecting surface defects of metallurgical products by means of eddy currents, said device comprising a first transmitter (10, 30, 33) designed to generate a magnetic field in proximity of the surface of a product to be inspected, and a first receiver (11, 31, 32) separate from the first transmitter and designed to pick up a signal conveying any disturbances of the eddy currents to the surface of the product by reason of defects present at this surface, characterised in that the said first receiver (11, 31, 32) is placed in relation to the first transmitter (10, 30, 33) on the one hand in such a way as to be aligned with the first transmitter in a direction corresponding to the general orientation of the defects to be detected on the surface of a metallurgical semi-manufactured product, and on the other hand at a sufficient distance from the first transmitter for the said first receiver not to be substantially influenced by the magnetic field generated by the first transmitter when the surface of the semi-manufactured product examined is free from defect, in order that a significant signal only be picked up by the receiver in the case of the deflection of the eddy currents in the direction of the receiver as a result of the presence of a defect on the surface of the semi-manufactured product.

7. Device according to claim 6 wherein the transmitter and the receiver used are in the form of coils with axes perpendicular to the surface of the product, characterised in that the distance d between the axis of the transmitting coil and the axis of the or each receiving coil is such that the space $d - (r_0 + r_1)$ is contained between 0 and 25 mm, $r_0$ and $r_1$ being the respective radii of the transmitting and receiving coils.

8. Device according to either of claims 6 and 7, characterised in that it comprises a second transmitter (33) and a second receiver (32), the said second transmitter being spaced from the first transmitter in such a way as to avoid an interaction between the transmitter-receiver pairs (30, 31: 33, 32), the second receiver being placed in relation to the second transmitter in the same manner as the first receiver (31) in relation to the first transmitter (30), and means are provided for supplying a signal representative of the difference between the signals supplied by the two receivers.

9. Apparatus for detecting defects on a steel slab coming out of a continuous casting plant, characterised in that it comprises a device according to any one of claims 6 to 8.

Fig.2

Fig.1A

Fig.1B

EP 0 195 794 B1

Fig.3A

Fig.3B

Fig.3C

Fig.3D

Fig.4A

Fig.4B

Fig.4C

Fig.4D

Fig.5A

Fig.5B

Fig.5C

Fig.5D

Fig.5E

Fig. 6

Fig. 7A

Fig. 7B

Fig. 7C

Fig. 7D